# EUROPEAN PATENT APPLICATION

(11) **EP 2 338 352 A1**
(43) Date of publication of application: **29.06.2011**
(21) Application number: 09382292.2
(22) Date of filing: 22.12.2009
(51) Int. Cl.: A23C 13/12, A23C 15/16

(54) **Butter and process for obtaining same**

(71) Applicant: Corporacion Alimentaria Penasanta, S.A., 33199 Granda-Siero (Asturias) (ES)
(72) Inventor: Balbarie, Philippe, 33199 Granda (Siero) (ES); Echevarria Gutierrez, Francisco, Javier, 33199 Granda (Siero) (ES); Iglesias Barcia, Jose, Ramon, 33199 Granda (Siero) (ES)
(74) Representative: Carpintero Lopez, Francisco

(57) **Abstract**

The present invention relates to a new butter and a process for preparing same comprising: (a) grinding and mixing the starting ingredients, and (b) heat treatment at a temperature comprised between 70-150°C, wherein the starting ingredients comprise: (i) a fat selected from among cream, butter, anhydrous milk fat and mixtures thereof and (ii) at least one additive selected from the group of stabilizers, thickeners, texturing agents, emulsifiers and mixtures thereof. The invention also relates to a process for packaging the butter in a package, such as a spray type container, or a tube type container, or a dispensing package with a membrane stopper, as well as the packaged butter obtained.

## Description

### Field of the Invention

The present invention relates to a butter with good organoleptic properties and certain texture and viscosity characteristics allowing its packaging in a dispensing device with a membrane stopper. This type of package increases the useful life of the butter, which is preserved intact and isolated from the outer medium for more time, and prevents its microbiological contamination.

### Background of the Invention

Butter is the fatty product obtained by the mechanical processing of hygienized and thermized cream. Said cream is obtained by centrifugation of cow's milk which, once thermized and cooled, is subjected to a maturation and churning process by means of beating in a churn (traditional butter) or worm screws in the lactic concentration process, which simulate the traditional cream churning and mixing process. By means of this process a phase reversal is achieved, transforming a fat in water emulsion (cream) into a water in fat emulsion (butter). It is usual to add conventional milk ferments during the beating process for the of enhancing its taste and reducing its pH. Other ingredients can also be added such as, for example, salts, vitamins, flavors and colorants. According to the Spanish food code, butter must contain a minimum of 82% fat with a maximum moisture of 16% and a lean dry extract of 2% as a maximum. Its consistency must be solid and homogeneous with a more or less intense yellow color and with a characteristic taste and odor.

It is also usual to find light or low-fat butters on the marker According to European legislation, a light product is that which has at least a 30% reduction in its energy value, with the traditional product.

Patent US 5,487,913 describes a method for manufacturing a butter with a minimum fat content of 25%, which includes a pasteurization step between 65 and 98°C and then a homogenization preferably at two different pressures for the purpose of achieving a phase reversal and forming a stable emulsion. To achieve the stability of this emulsion and an optimal quality of the end product, it is recommended to mix the cream base with stabilizers, emulsifiers and texturing agents (lecithin), without which the draining of whey or the loss of firmness of the product occurs, rendering it useless for the purpose proposed above. Butters having a low fat content, which allows classifying them as light butters are manufactured by means of this process. These butters have the firmness of conventional butters or are spreadable at refrigeration temperature, and often include multiple texturing agents, emulsifiers and preservatives.

Light butter currently available in the state of the art require the addition of preservatives due to the fact that, on one hand, the products manufactured by means of this process are not sterile and, on the other hand, the development of microorganisms, molds and yeasts is considerably more important in this type of light products than in original butter due to their higher water content and activity. If preservatives are not used, their shelf life would be even more limited. In fact, low-fat butters which are currently on the market must be preserved in cold conditions at temperatures normally less than 10°C to prevent their rapid deterioration.

The butters on the market allow their spreadability, but the necessary contact with utensils such as cutlery for spreading or serving them promotes their contamination from the exterior and the development of microorganisms, molds and yeasts, which decrease their useful life and their shelf life. Furthermore, during their consumption butters are repeatedly exposed to the oxygen of the air which oxidizes their components and reduces their organoleptic characteristics and their quality.

Dispensing devices with membrane stoppers which are currently used on the market for products with textures and viscosities compatible therewith, such as syrups, honey and jams, are known in the state of the art. It would therefore be desirable to have in the state of the alternative butters having the suitable properties of texture, viscosity and creaminess being packaged in a package with a membrane dispensing device with the advantages that this entails for the useful life and quality of the packaged product

Brief Description of the Drawings
Figure 1: Variation of the viscosity according to stress,
Figure 2: Variation of the moduli of elasticity (G') (red) and viscosity (G") (blue) according to stress.
Figure 3: Variation of the moduli of elasticity (G') (red) and viscosity (G") (blue) according to temperature.
Figure 4: Variation of the moduli of elasticity (G') (red) and viscosity (G") (blue) according to time.

### Detailed Description of the Invention

The present invention relates in one aspect to a new butter, having suitable properties of texture, viscosity and creaminess allowing it to be packaged in a type of package such as a package with a membrane dispensing device. This butter, hereinafter butter of the invention, includes in the context of the present invention so-called light butters complying with the definition of light product established by European legislation, i.e., that having at least 30% less energy value with respect to the value of traditional butter.

The butter of the invention can therefore have a variable fat content comprised between 10 and 83%. The butter is obtained by means of a process which is another aspect of the invention. Said process, hereinafter process of the invention, comprises the steps of
a) grinding and mixing the starting ingredients,
b) heat treatment at a temperature comprised between 70-150°C.

The starting ingredients comprise (i) a fat selected from among cream, butter, AMF and mixtures thereof, which can be used in various proportions, and (ii) at least one additive selected from the group of the stabilizers, thickeners, texturing agents, emulsifiers and mixtures thereof. Among the stabilizers, thickeners, texturing agents, emulsifiers used in the present invention can be mentioned for example, microcrystalline cellulose, carboxymethylcellulose (CMC), milk proteins, gelatin, alginates, gums such as locust bean gum, guar gum, starches, carrageenans, mono- and diglycerides of fatty acids, polyglycerol polyricinoleate. The presence in the resulting butter of at least one additive contributes to adjusting the texture of the butter. Some of the additives can be conventionally considered as stabilizers, or thickeners, or texturing agents, or emulsifiers, and can however fulfill at least two of these functions; this is the case of milk proteins, for example, which work in the present invention as texturing agents although they are generally considered emulsifiers.

At least another additive, hereinafter referred to as conventional additive, can also be used optionally as an additional starting ingredient, among which water, milk whey, acidity regulators, such as citric acid, flavors, colorants, salts, fat-soluble vitamins such as vitamin A and E, and preservatives, to extend the useful life of the butter, and mixtures of the above, should be mentioned.

All the starting ingredients are obtainable either as set forth below by means of well known processes or commercially. Unless expressly otherwise indicated, the percentages refer to percentages by weight with respect to total weight of the starting ingredients.

In the present invention, the starting materials comprise butter, cream and/or AMF and the additive in the following proportions:
- between 0 and 70% cream
- between 0 and 40% butter
- between 0 and 40% AMF; and
- between 3 and 15% of at least one additive selected from the group consisting of stabilizers, thickeners, texturing agents, emulsifiers and mixtures thereof.

In a particular embodiment the additive comprises between 5 and 10% by weight with respect to the total weight of the starting ingredients.

Optionally the starting materials comprise at least one optional additive in variable amounts, although generally in a proportion typically comprised between 0 and 55%.

In a particular embodiment the starting ingredients comprise:
- between 50 and 70% cream
- between 0 and 40% butter
- between 3 and 15% texturing agent.

In another particular embodiment a texturing agent is used which is preferably selected from among the group consisting of microcrystalline cellulose, CMC, milk proteins, gelatin, alginates, gums and mixtures thereof, more preferably it is selected from among the group consisting of microcrystalline cellulose, carboxymethylcellulose (CMC), milk proteins, gelatin, and mixtures thereof.

The components are added in different proportions to adjust the fat content of the resulting butter as desired.

The cream is a well known product which can be prepared in the same facilities in which the process of the invention is carried out or be commercially acquired. The cream used in the present invention can have a fat content comprised between 12 and 60%. In a particular embodiment it has a fat content between 35 and 40%.

The starting butter can also be prepared in the same facilities in which the process of the invention is carried out by means of any known process or be commercially acquired.

The anydrous milk fat (AMF) is used in baking, cookie manufacture etc., it has little water, therefore it cannot contain germs, and has a very large amount of fat, exceeding 99.5%. The process for obtaining it can be indirect or direct.

The cream, the butter, and the AMF are combined in the suitable proportion according to the fat and dry extract specifications sought in the final butter.

The starting ingredients selected from cream, butter, AMF and mixtures thereof and at least one additive selected from the group consisting of stabilizers, thickeners, texturing agents, emulsifiers and mixtures thereof, are weighed and added in a suitable vessel provided with stirring means to carry out the step of grinding and mixing.

The mixing can be carried out at room temperature, and can optionally be heated at a temperature typically equal to or less than 70°C, although said temperature can be greater, to assure a good mixing and prevent the separation of the ingredients. The heating can be carried out in a cooker, for example, with stirring means by means of a conventional steam injection. The grinding and mixing time can be variable and is typically of a few minutes.

In this step, the mixture melts, obtaining a liquid or a more or less viscous paste, in which the presence of undissolved solids is residual.

The step b) of heat treatment generally comprises subjecting the mixture to a temperature comprised between and 150°C to and/or the pathogenic population of microorganisms. The enzymes which could modify the tastes of the ingredients are furthermore deactivated during this step. This step can be carried out during or after the step a) of mixing and grinding, i.e., in a embodiment the mixture is ground and/or during the heat treatment.

Optionally, a step of filtration can furthermore carried out in the process of the invention by placing a mesh filter at the outlet of the vessel in which the mixing is performed, in the corresponding facility in which the process is carried out. The entrance of undissolved solids in the following step is thus prevented.

After performing the step of mixing and grinding and optionally the filtration of the mixture, a step of homogenization can furthermore be performed optionally. The homogenization is a treatment which breaks fat particles and other particles and aggregates such as those consisting of fat, proteins, salts, etc., into smaller particles, such that it favors obtaining a mixture with a creamy, light, fine texture free of all roughness. This operation is performed by subjecting the mixture to high pressure which can range between 10000 and 30000 kPa so that it flows through small holes generally of 10 to 35 µm. Although the benefit of the homogenization can be considerable, its performance is optional according to the need of the resulting mixture itself, since it is possible to obtain a butter with a creamy, light, fine texture free of all roughness, without this step with the suitable mixing and grinding conditions of step a).

The heat treatment (step b)) allows obtaining a sterile product. In a particular embodiment, it is carried out by means of a pasteurization process at high temperature, i.e., greater than 70°C. A temperature higher than a normal pasteurization is used due to the protective effect caused by the fat on the microorganisms, partially insulating them from the effects of the temperature. The useful life of the obtained butter is always shorter than in the case of a butter obtained using a UHT treatment.

In another particular embodiment, it is carried out by means of UHT which can be performed by means of a direct uperization system or by means an indirect system. The UHT heat treatment temperature is comprised between 110 and 160°C and is maintained for a time comprised between 2 and 90s (time during which the maximum sterilization temperature is maintained). The temperature will be that which eliminates the pathogens and provides sterilization the mixture in case. Said temperature can vary according to the of the mixture, to the composition, for example to the fat content therein, and to the water activity of the obtained butter. The sterilization temperature may be reduced for example by reducing the pH by means of adding a pH regulator such as the citric acid or lactic for example.

The longer the sterilization time the more roasted is the taste of the obtained butter.

The sterilization can be carried out by means of any method and in any conventional device. In a particular embodiment, it is out by means of a direct system of steam injection and subsequent extraction thereof in a vacuum chamber. This vacuum chamber can also act as a buffer tank prior to the packaging machine. In another particular embodiment, a conventional indirect system of sterilization with a heating with steam in tubular exchangers.

The process of the invention provides a butter with high stability and a limited draining of whey. Said butter has a creamy, light, fine texture free of all roughness.

The resulting microstructure is such that the particles perceived while chewing are nil, and the texture is therefore smooth, fine, with absolute absence of graininess and grittiness. The likewise resulting high solubility of the butter of the invention corresponds to the way in which the butter dissolves under the effect of the saliva and is due to the absence of particles with a size greater than 1 micron and to its high fat content.

The tactile sensations are especially important for characterizing the texture of the obtained butter. The texture is made up of several factors among which are the elasticity, the firmness in the mouth, the unctuosity, the microstructure and the solubility.

The resulting elasticity is limited despite being a very structured product The butter does not recover its initial shape although it has a behavior which is more elastic than viscous because the sample recovery percentage is high, i.e., > 50%.

The firmness is high, because when a stress is applied it is observed that the viscosity remains more or less constant between 20 and 100 Pa of stress.

The high fat content as well as its shear strength provides a greasy sensation in the mouth with a high unctuosity level.

The butter of the invention has in total between 10-83% fat and between 40-90% by weight of dry extract.

The organoleptic of the product of the invention vary according to its ingredients and of the specific process for obtaining same and its parameters. The viscosity can vary between broad ranges. In a particular embodiment, the viscosity is comprised between 15000 and 40000 cP measured at a temperature of 10°C by means of the Brookfield DV-11 + Pro viscometer (measurement parameters: module 6 speed 10). The viscosities of the present invention have been measured in the same conditions unless otherwise specified.

In a particular embodiment, in which the heat treatment is carried out according to UHT, a sterile butter is obtained. In the context of invention, sterile is understood as having a germ content less than 1 UFC/mL after incubation at 30°C for 15 days. In a particular embodiment of the invention, said sterile butter can be maintained sterile provided that the subsequent handling is performed in aseptic conditions as set forth below.

In another aspect, the invention relates to a process for packaging the butter of the invention comprising a packaging step. By putting this process for packaging into practice, the butter of the invention is obtained in a package, product, which is another aspect of the invention.

The step of packaging is generally performed at a temperature comprised between 6 and 98°C. Said temperature can already be reached during the process of the invention for obtaining the actual butter, which depends on how the step of heat treatment is carried out.

In this sense in the case of using a direct system of sterilization with steam, a first cooling of the butter of the invention takes place in the vacuum chamber or extraction chamber itself. The butter can be directly packaged at this high temperature comprised between 50 and 98°C, no additional cooling being theoretically necessary.

Alternatively, and if necessary, the butter obtained after the heat treatment is cooled at a packaging temperature generally comprised between 6 and 98°C prior to the packaging.

The final cooling temperature is determined by the viscosity of the product and its fluidity.

The packaged butter of the invention maintains its organoleptic properties and its quality intact for more time, such that the average life of butter, the optimal for its consumption and the expiration date is extended, even without the addition of preservatives.

The packaging can be performed in conditions, the microbiological contamination during the filling and packaging thus being prevented. If the butter of the invention to be packaged is sterile, due to having put into practice the heat treatment according to a UHT method, and the packaging is performed in aseptic conditions, a sterile packaged butter is obtained. According to this particular embodiment, without the addition of preservatives a butter with long average life and high quality is obtained.

The package useful for the present invention can theoretically be any type of package, preferably a spray type container, a tube type container, or a package with a dispenser with a membrane stopper, such as for example a container provided with a dispensing and anti-drip nozzle with a membrane, for example with a silicone membrane. This type of package which can be used according to the present invention favors the longevity and durability the butter since as a result of its design it prevents the introduction of cutlery or tools for spreading or serving the butter to the consumer. Consequently, the butter remains isolated from the contamination of microorganisms, from the contact with the atmosphere and from tastes coming from the environment as well as from other food products.

With respect to dispensing packages with a membrane stopper, those especially designed for the food sector, for example, can be used. These packages are single-layer or multi-layer packages, for example, manufactured by a coextrusion process and provided with a membrane stopper. They can be prepared from a number of materials, for example, from polypropylene. To confer the anti-drip function, the stoppers are provided with a valve, for example of silicone with a flexible touch, which confers a precise application directly the chosen area without having to touch the funnel with the fingers. A slight pressure applied to the package by the consumer allows the exit of the butter without there having been contact between it and the exterior or any tool. At the time that the pressure in the package eases, the flow of the butter stops as a result of the valve and the applicator always remains clean.

Examples of the invention are presented below which are set forth to better understand the invention and which in no case must be considered as a limitation of the scope thereof.

### Examples

### Example 1. Process for manufacturing a light butter with a final fat content equal to 40% and a total dry extract of 50%.

In a tank provided with stirring, 68.10 kg of thermized cream with 40% fat analyzed by means of a butyrometer were incorporated. On this cream, 15.80 kg of butter, 9.90 kg of water, the texturing agents (see Table 1), colorant (50 ml of β-carotene) and 100 ml of butter flavor were added. This mixture was ground and mixed at 25°C. The heating occurred by means of injecting steam into the mixture. Citric acid was added to this mixture until reaching a pH of between 5.6-6, for the purpose of reducing the acidity and, therefore, the sterilization temperature.

The mixture was then preheated in a scraped surface heat exchanger to 70°C. This mixture was passed through a 1 mm mesh filter. It was then sterilized by means of injecting steam. The temperature of the mixture thus rose to 130°C, which was maintained for 10 seconds. For the purpose of extracting the injected steam again, the product was subjected to a vacuum of 80000 Pa (0.8 bar). The temperature at the outlet of the vacuum chamber was regulated at 70°C, and no additional cooling was performed, the product being packaged at this temperature, in aseptic conditions.

The product obtained by means of this process has a germ content less than 1 CFU/mL after incubation at 30°C for 15 days. Furthermore, its low viscosity measured at 6°C of 20000 cP (or 3500 cP at 70°C) enables packaging this butter in a container provided with a dispensing and anti-drip Teflon membrane nozzle, which involves a greater functionality in its application. The specifications of the butter obtained by means of this process are shown in Table 1

| Table 1 | | |
|---|---|---|
| Formulation | | |
| Cream 40% fat | | 68.1 |
| Butter | | 15.8 |
| Water | | 9.9 |
| Citric acid | | 0.1 |
| Texturing agents | | |
| | Gelatin | 0.8 |
| | CMC | 0.7 |
| | Cellulose | 3.4 |
| Starch | | 1 |
| Colorant | | 0.05 |
| Flavor | | 0.15 |
| | | 100 |

### Example 2. Manufacture of a light butter with a final fat content equal to 55% and a total dry extract of 60%.

In a tank provided with stirring, 81 kg of thermized cream with 40% fat analyzed by means of a butyrometer were incorporated. On this cream, 40 kg of butter 2.95 kg of water and texturing agents (gelatin, milk proteins, alginate gum, starch), flavor and colorants were added.

This mixture was ground and mixed at 30°C, The heating occurred by means of injecting steam into the mixture, Citric acid was added to this mixture until reaching a pH of 5.7 for the purpose of reducing the acidity and, therefore, the sterilization temperature.

The mixture was then preheated in a scraped surface heat exchanger to 70°C. This mixture was passed through a 2 mm mesh filter. It was then homogenized at 20000 kPa (200 bar) of pressure and sterilized by means of injecting steam. The temperature of mixture thus rose to 130°C, which was maintained for 15 seconds. For the purpose of extracting the injected steam again, the product was subjected to a vacuum of 60 kPa (0.6 bar). The temperature at the outlet of the vacuum chamber was regulated at 70°C, and the product was then cooled at 40°C and the packaging of the product was carried out.

The low viscosity of the product thus obtained (between 3000 and 5000 cP measured at 70°C) enabled the filling thereof in spray type containers and in tube type containers. The specifications of the product obtained by means of this process are shown in Table 2.

| Table 2 | | |
|---|---|---|
| Formulation | | |
| Cream 40% fat | | 81 |
| Butter | | 40 |
| Water | | 2.95 |
| Citric acid | | 0.05 |
| Texturing agents | | |
| | Gelatin | 0.5 |
| | Milk proteins | 2.1 |
| | Alginate | 0.2 |
| | Gum | 0.2 |
| | Starch | 1 |
| Colorant | | 0.05 |
| Flavor | | 0.15 |
| | | 128.2 |

### Example 3. Manufacture of a light butter with a final fat content equal to 30% and a total dry extract of 40%.

In a tank provided with stirring, 50 kg of thermized cream with 40% fat analyzed by means of a butyrometer were incorporated. On this cream, 11 kg of water, 3 kg of starch and texturing agents were added. This mixture was ground and mixed at 15°C.

The mixture was then preheated in a scraped surface heat exchanger to 80°C. This mixture was passed through a 2 mm mesh filter. It was then sterilized by means of injecting steam. The temperature of the mixture thus rose to 155°C, which was maintained for 15 seconds. For the purpose of extracting the injected steam again, the product was subjected to a vacuum of 50 kPa. The temperature at the outlet of the vacuum chamber was regulated at 80°C, and it was homogenized at 20000 kPa of pressure and the product was then cooled in a tubular heat exchanger at 50°C and the packaging of the product was performed.

The low viscosity of the product thus obtained (between 3000 and 5000 cP measured at 70°C) enabled the filling thereof in containers provided with a dispensing nozzle with an anti-drip membrane, in spray type containers and in tube type containers. The specifications of the butter obtained by means of this process are shown in Table 3.

| Table 3 | | |
|---|---|---|
| Formulation | | |
| Cream 40% fat | | 50 |
| Water | | 11 |
| Citric acid | | 0.05 |
| Texturing agents | | |
| | Gelatin | 0.3 |
| | Milk proteins | 1.5 |
| | CMC | 0.5 |
| | Gum | 0.2 |
| | Starch | 0.5 |
| Colorant | | 0.05 |
| Flavor | | 0.15 |
| | | 64.25 |

### Example 4. Light butter

A light butter with the following composition was obtained. Composition:

| Table 4 | | |
|---|---|---|
| Formulation | | |
| Cream 36% fat | | 60 |
| Butter | | 22 |
| Water | | 9 |
| Citric acid | | 0.05 |
| Texturing agents | | |
| | Gelatin | 0.3 |
| | Milk proteins | 7 |
| | CMC | 0.25 |
| | Cellulose | 1 |
| Preservative | | 0.2 |
| Colorant | | 0.1 |
| Flavor | | 0.1 |
| | | 100 |

The process for obtaining it consisted of selecting the ingredients which were mixed and ground in a Stephan brand cooker provided with stirring art 1500 rpm to a temperature of 90°C by means of direct steam injection for 5 minutes. The heat treatment was then performed by means of high pasteurization at 90°C, maintaining grinding at 3000 rpm, by means of direct steam injection for 3 minutes. It was then packaged.

The obtained light butter was subjected to the following tests to study its rheology, the following results being obtained:

### Example 5. Rheological study of the right butter of Example 4

### 1. Methodology and equipment

The rheological tests were carried out in steady and non-steady flow conditions.

The equipment used was a HAAKE MARS rotational rheometer with a Peltier temperature control system. Rotational rheometer can work in different modes:
o CR mode, or controlled mode, in which a deformation rate is assigned and the stress generated is measured.
ο CS mode, or controlled stress mode, in which the deformation rate at a given deformation stress is measured.
o CD mode, or controlled deformation mode.

The conditions common to all the tests were:
- Rest time of the sample in the rheometer of 15 minutes, prior to any test.
- Test temperature of 10°C (except in the temperature scan).
- Use of silicone oil on the edges of the sensor and bell jar to prevent the drying of the sample during the test.
- All the tests were performed at least in duplicate.

### 1.1. Stationary tests

The sensor used in the stationary tests was the serrated parallel plates with a diameter of 35 mm (PP35s) with a groove between plates of 1 mm.

### 1.1.1. Stress ramp

The stress ramp was performed in CS mode, increasing the stress and measuring the deformation rate generated. A stress ramp (T) from 0.1 to 100 Pa was applied in a time of 300 s. The fluidity limit (TO) was calculated from the data obtained.

### Results: stress ramps

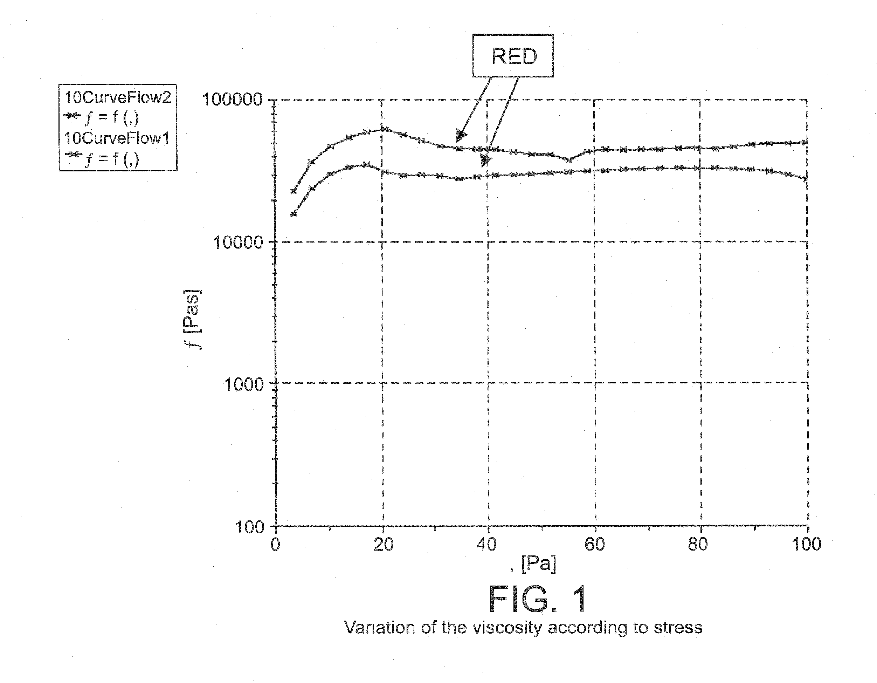

Figure 1 shows the graph corresponding to the variation of the viscosity according to stress, and the data corresponding to the duplicate of the test are shown. It is observed that the viscosity remains more or less constant between 20 and 100 Pa of stress. Likewise it is observed that a value of viscosity between 300000 and 500000 Poises was obtained for a stress ramp performed at 10°C from 0.01 to 100 Pa in 300 s.

The Haake Rheowin Software was used, which allows calculating the fluidity limit or limit stress (TO) the studied sample. The fluidity limit is defined as the minimum stress necessary for the sample to start flowing, The average value of the fluidity limit of this sample, obtained from the flow curves, was 23 Pa, slightly lower than the values described in the literature for mayonnaise, about 40 Pa.

### 1.2. Dynamic or oscillatory tests

These tests are characterized in that deformation rates or stresses are applied in an oscillatory manner, at a certain sinusoidal frequency; and are used to evaluate viscoelastic substances. They are complemented with the creep and recovery tests. The sensor used in the oscillatory tests was the parallel plates with a diameter of 60 mm (PP60Ti) with a groove between plates of 1 mm.

### 1.2.1 Stress scan

This test is used to determine the linear viscoelastic area of the studied sample. It was performed in CS mode, carrying out a stress ramp (r) from 0.01 to 100 Pa, at a frequency of 1 Hz.

### Stress scan results

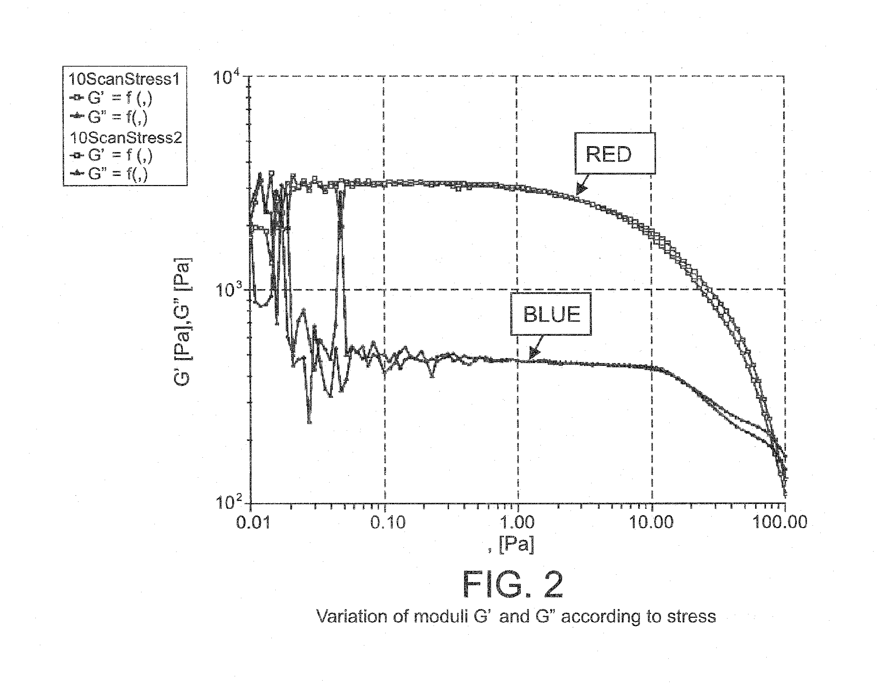

Figure 2 shows the graph corresponding to the stress scans, and the data corresponding to the duplicate of the test are shown. The variation of the moduli of elasticity (G') (red) and viscosity (G") (blue) according to the stress is observed. The linear viscoelastic range can be defined as the area in which the applied stress is directly proportional to the deformation generated, such that when the value of the stress applied on the sample is doubled, the value of the deformation would be doubled as a response. In practice, this linear range can be determined as that area in which the moduli G' and G" depicted in the y-axis are parallel to the x-axis in which the stress is depicted.

The linear viscoelastic range of this sample can be defined approximately between 0.1 and 1.0 Pa for a stress scan performed at 10°C from 0.01 to 100 Pa, with constant values of the moduli elasticity and viscosity of approximately 3000 and 500 Pa respectively.

### 1.2.2. Temperature can

The CS mode with a constant stress of 0.5 Pa (value taken from the linear area obtained from the stress scan) at a frequency of 1 Hz, from 5 to 25°C at a heating rate of 1°C/min, was used.

### Results of the temperature scan

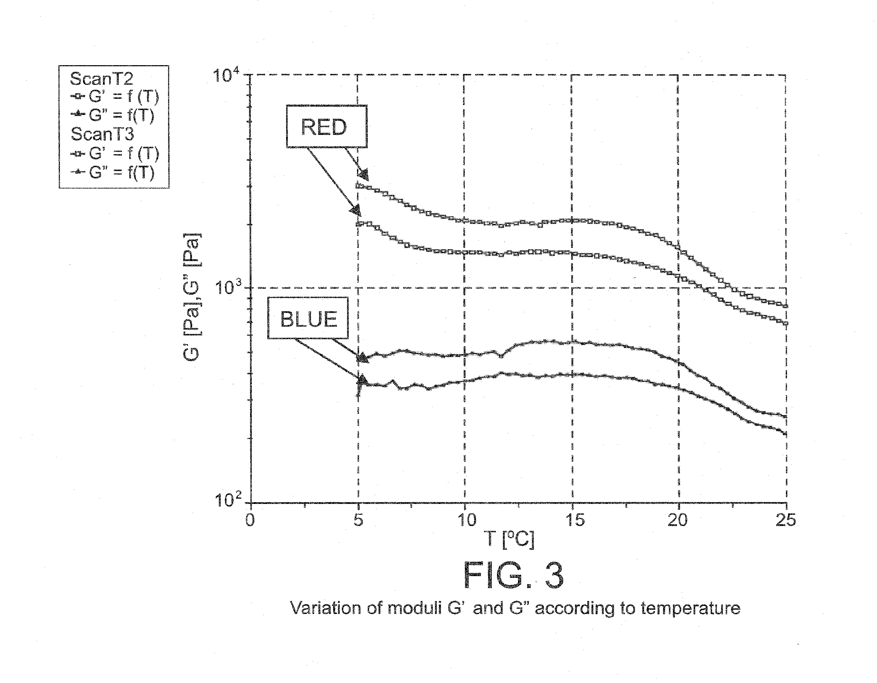

Figure 3 show the graph corresponding to the temperature scans, the data corresponding to the duplicate of the test are shown. The variation of the moduli of elasticity (G') (red) and viscosity (G") (blue) according to temperature are shown.

The value of both moduli is more or less constant between 5 and 20°C, for a temperature scan performed from 5 to 25°C at a heating rate of 1°C/min and at a constant stress of 0.5 Pa. The constant values of G' and G" are approximately 1500 and 400 Pa respectively. After that temperature, both G' and G" start decreasing rapidly.

### 1.3. Creep & recovery tests

This test is the most used to evaluate the elastic and viscous percentage of a viscoelastic substance, It consists of subjecting the sample to a constant stress for a given time interval, in which period the deformation of the fluid (creep phase) is recorded. The application of the stress is subsequently stopped and the degree of recovery of the sample with respect to its initial state for a given time (recovery phase) is observed.

The creep & recovery test was performed by subjecting the sample at 10°C to a constant stress of 0.5 Pa for 180 s and subsequently to a recovery time at zero stress for 300 s. The sensor used was the parallel plates with a diameter of 60 mm (PP60Ti) with a groove between plates of 1 mm

### Creep & Recovery results

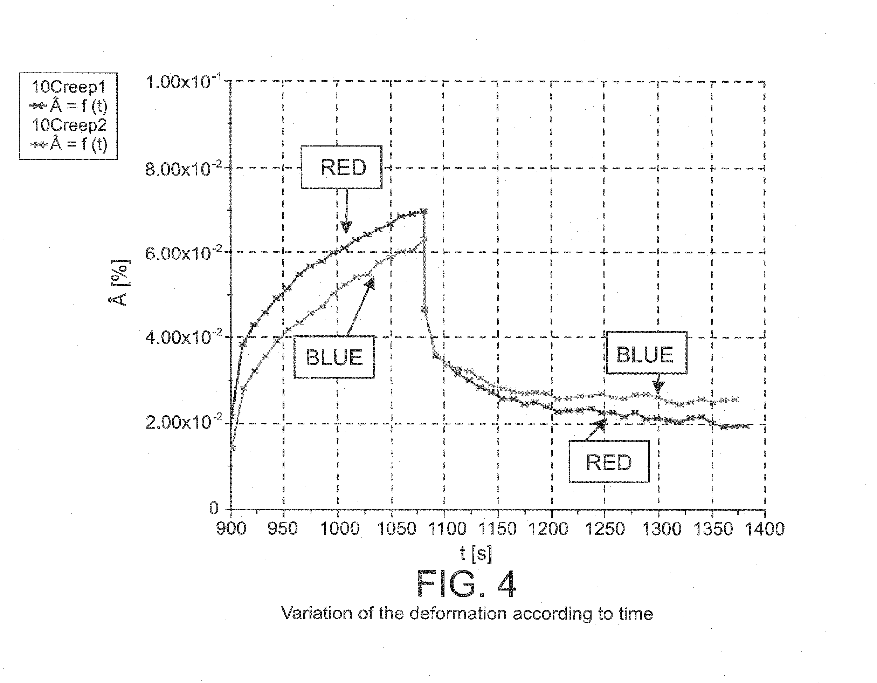

Figure 4 shows the graph corresponding to the creep & recovery tests, the data corresponding to the duplicate of the test are shown. The variation of the deformation according to time is observed.

The Haake Rheowin Software allows calculating the recovery percentage of the studied sample from the creep & recovery tests. The average recovery percentage obtained for this sample is 66%, therefore this sample has a behavior which is more elastic than viscous.

## Claims

1. Process for preparing a butter comprising the steps of
a) grinding and mixing the starting ingredients, and
b) heat treatment at a temperature comprised between 70-150°C, and
wherein the starting ingredients comprise (i) a fat selected from among cream, butter, anhydrous milk fat and mixtures thereof and (ii) at least one additive selected from the group of the stabilizers, thickeners, texturing agents, emulsifiers and mixtures thereof.

2. Process according to claim 1, wherein the starting ingredients comprise:
• between 0 and 70% cream
• between 0 and 40% butter
• between 0 and 40% AMF; and
• between 3 and 15% of at least one additive selected from the group consisting of stabilizers, thickeners, texturing agents, emulsifiers and mixtures thereof.

3. Process according to claim 2, wherein the starting ingredients comprise:
• between 50 and 70% cream
• between 0 and 40% butter
• between 3 and 15% texturing agent.

4. Process according to claim 1, 2 or 3, wherein the additive comprises between 5 and 10% weight with respect to the weight of the starting ingredients.

5. Process according to any one claims 1 to 4, wherein the additive is selected from among the group consisting of microcrystalline cellulose, carboxymethylcellulose, milk proteins, gelatin, alginates, locust bean gum, gum guar, starches, carrageenans, mono- and diglycerides of fatty acids, polyglycerol polyricinoleate and mixtures thereof, preferably selected from among microcrystalline cellulose, CMC, milk proteins, gelatin, alginates, gums and mixtures thereof, more preferably selected from among the group consisting of microcrystalline cellulose, carboxymethylcellulose (CMC), milk proteins, gelatin, and mixtures thereof.

6. Process according to any one of claims 1 to 5, wherein the heat treatment is performed by means of pasteurization at a temperature greater than 70°C.

7. Process according to any one of claims 1 to 5, wherein the heat treatment is performed by means of a direct system of uperization steam injection at a temperature comprised between 110 and 160°C, maintaining this temperature, for a time comprised between 2 and 90 s.

8. Butter obtainable by means of the process according to any one of the previous claims.

9. Butter according to dim 8, having a content comprised between 10-83% fat with respect to the total weight of the composition and between 40-90% by weight of dry extract with respect to the total weight of the composition.

10. Butter according to any one of claims 8 or 9, having a germ content less than 1 CFU/mL after incubation at 30°C for 15 days.

11. Butter according to any one of claims 8 to 10, having a viscosity comprised between 15000 and 40000 cP measured at a temperature of 10°C in a Brookfield DV-11 + Pro viscometer with the parameters of module 6 and spewed 10.

12. Butter to any one of claim 8 to 11, having :
a value of viscosity between 300000 and 500000 Poises for a stress ramp performed at 10°C from 0. 0 to 100 Pa in 300 s;
a linear viscoelastic range between 0.1 and 1 Pa for a stress scan performed at 10°C from 0.01 to 100 Pa, with constant values of the moduli of elasticity and viscosity of approximately 3000 and 500 Pa respectively;
constant values of the moduli of elasticity and viscosity of approximately 1500 and 400 Pa respectively between 5 and 20°C for a temperature scan performed from 5 to 25°C at a heating rate of 1°C/min and at a constant stress of 0.5 Pa;
a recovery percentage of 66% for a creep and recovery test performed at 10°C wherein in the creep phase a constant stress of 0.5 Pa is applied for 180 s and subsequently the recovery phase has a duration of 300 s.

13. Process for packaging the butter according to any one of claims 8 to 12, comprising a step of packaging in a package, preferably at a temperature comprised between 6 and 98°C and preferably in aseptic conditions, a packaged sterile butter being obtained.

14. Process according to claim 13, wherein the package is a spray type container, or a tube type container, or a dispensing package with a membrane stopper.

15. Process according to one of claim 13 to 14, wherein the dispensing package with a membrane stopper is a container provided with a dispensing and anti-drip nozzle with a membrane, particularly with a silicone membrane.

16. Butter in a package obtainable by means of the process according to any one of claims 13 to 15.
